(19) Europäisches Patentamt
European Patent Office
Office européen des brevets

(11) **EP 3 744 683 A1**

(12) **EUROPEAN PATENT APPLICATION**

(43) Date of publication:
**02.12.2020 Bulletin 2020/49**

(51) Int Cl.:
***C01B 33/159*** (2006.01)   ***C01B 33/16*** (2006.01)
***B01J 20/10*** (2006.01)

(21) Application number: **19177278.9**

(22) Date of filing: **29.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nouryon Chemicals International B.V.**
**6824BM Arnhem (NL)**

(72) Inventors:
• FIJNEMAN, Andreas Josephus
  NL-6824 BM Arnhem (NL)
• HÖGBLOM, Joakim Erik Patrik
  NL-6824 BM Arnhem (NL)
• SOMMERDIJK, Nico Antoon Jaques Maria
  NL-5612 AE Eindhoven (NL)
• FRIEDRICH, Heiner
  NL-5612 AE Eindhoven (NL)

(74) Representative: **LKGlobal UK Ltd.**
**Cambridge House, Henry Street**
**Bath BA1 1BT (GB)**

(54) **POROUS SILICA PARTICLES**

(57)   The invention relates to a porous silica having an average pore diameter in the range of from 20 to 450 Å, a median (D50) pore diameter in the range of from 20 to 450 Å, a pore volume in the range of from 0.15 to 1.2 $cm^3$ $g^{-1}$, a surface area in the range of from 100 to 600 $m^2$ $g^{-1}$, and a span of 0.80 or less.

The invention also relates to a method of producing a porous silica, in which an aqueous phase comprising nanoparticulate silica and an organic phase are mixed together to form a water-in-oil dispersion or emulsion, in which the organic phase comprises an organic solvent that is insoluble or partially soluble in water, and optionally also a non-polar organic compound that is insoluble in water and at least partially soluble in the organic solvent, wherein a gelling agent is present in the aqueous phase such that the nanoparticulate silica gels to form a porous silica.

## Description

### Technical Field

The invention relates to materials comprising porous silica particles, and to a method of their production. The porous silica particles can be used in many applications, either as-is or after surface modification, in particular as a stationary phase in chromatographic separation techniques.

### Background Art

Silica-based materials are commonly used in many applications, for example as stationary phases in chromatography, as catalysts or catalyst carriers, or as ion exchangers. Different applications have different requirements, for example in particle purity, alkali metal content, pore characteristics and mechanical strength.

An advantage of silica is that its properties can be highly tailored, for example by varying its pore characteristics or by chemically modifying the surface. This can be highly useful in separation applications, for example, because such versatilityenables it to be used for many different types of separation.

A common route to making porous silica materials suitable in separation technology, for example, is via sol-gel chemistry, where a silica precursor such as a nanoparticular or colloidal silica is gelled under controlled conditions. Such a technique is described in EP0298062. This typically produces a porous silica with average pore diameters of up to 100 Å. Such silicas can be used to separate relatively small molecules, e.g. those having a molecular weight of 10 000 Da or less. However, for larger molecule separations, such as proteins where molecular weight is substantially higher, larger pores are preferred, typically greater than 200 Å, and often of the order of 300 Å.

Although such larger pore materials can be made by Ostwald ripening of a silica precursor material (e.g. one having pore sizes of the order of 100 Å), this is a time consuming process, and also often consumes silica that itself has value, for example as a separation medium for smaller molecules, or as a catalyst carrier. In addition, it may also require effort and time to manufacture the silica starting material, in order to arrive at a final large pore product with the required characteristics.

Other techniques for making larger pore silica are described in US3855172 and US4874518.

However, a further problem with prior art materials is that the larger pore sizes are often associated with relatively high pore volumes, which can negatively impact separation performance.

### Summary of Invention

The present invention is aimed at providing an improved and simpler method for preparing porous silica materials, and which can help produce silica with large pore sizes and high pore volume.

In one aspect, the invention relates to a method of producing a porous silica, in which an aqueous phase comprising nanoparticulate silica and an organic phase are mixed together to form a water-in-oil dispersion or emulsion, in which the organic phase comprises an organic solvent that is insoluble or partially soluble in water, and also optionally comprises a non-polar organic compound that is insoluble in water and at least partially soluble in the organic solvent, wherein a gelling agent is added to the aqueous phase of the dispersion or emulsion such that the nanoparticulate silica gels to form a porous silica.

In another aspect, the invention relates to a porous silica having an average pore diameter and/or a median pore diameter (D50) in the range of from 20 to 450 Å, a pore volume in the range of from 0.15 to 1.2 cm$^3$ g$^{-1}$, a surface area in the range of from 100 to 600 m$^2$ g$^{-1}$, and a span of 0.80 or less.

In yet another aspect, the invention relates to a separation column or vessel containing the porous silica.

In a further aspect, the invention relates to the use of the porous silica as a stationary phase in chromatography.

### Brief Description of Drawings

Figure 1 is an exemplary plot of cumulative pore volume versus pore diameter of a porous material, highlighting how the D10, D50 and D90 values are interpreted.

Figure 2 is an electron photomicrograph of a silica particle according to the invention (Example 70). The scale bar represents a length of 5 $\mu$m.

Figure 3 is an electron photomicrograph of a silica particle according to the invention (Example 70) at a higher magnification than Figure 2. The scale bar represents a length of 500 nm.

Figure 4 is a plot of pore volume versus pore diameter for a silica according to the invention, and for a comparative silica.

**Description of Embodiments**

[The Porous Silica]

The porous silica typically comprises no more than 10wt% of other oxide components. In embodiments there is no more than 5wt% other oxide components. Other oxide components can be other refractory oxides, for example oxides of aluminium, titanium, iron, chromium, zinc, zirconium, magnesium, calcium and cerium.

Alkali and alkaline earth content is also typically low, for example less than 1 wt% in total, and in further embodiments less than 0.1 wt%, for example less than 100 ppm.

In embodiments, the silica comprises no more than 0.1 wt%, for example no more than 100ppm, of any other oxide or alkali/alkaline earth metal impurity.

An exception to the above levels of other oxides is in embodiments where the surface of the porous silica, or the surface of the nanoparticulate silica used to make the porous silica, has been deliberately modified or doped. This is described in further detail below, but in embodiments there can be up to 10wt% aluminium oxide, for example up to 5wt% aluminium oxide.

In embodiments, the porous silica can have a pore volume in the range of from 0.15 to 1.2 $cm^3$ $g^{-1}$, for example from 0.5 to 1.0 $cm^3$ $g^{-1}$, or from 0.8 to 1.0 $cm^3$ $g^{-1}$.

In embodiments, the average pore diameter of the porous silica can be in the range of from 20 Å to 450 Å, for example 80 Å to 450 Å, or from 100 to 330 Å.

In embodiments, the porous silica can have a specific (total) surface area in the range of from 100 to 600 $m^2$ $g^{-1}$.

In embodiments, the porous silica can have a median pore diameter of from 20 to 450 Å, for example from 80 to 450 Å such as from 120 to 380 Å.

The method is capable of producing porous silica having a pore volume in the range of from 0.80 to 1.2 $cm^3$ $g^{-1}$, for example 0.81 to 1.0 $cm^3$ $g^{-1}$, in combination with a median and/or average pore diameter in the range of from 210 to 450 Å.

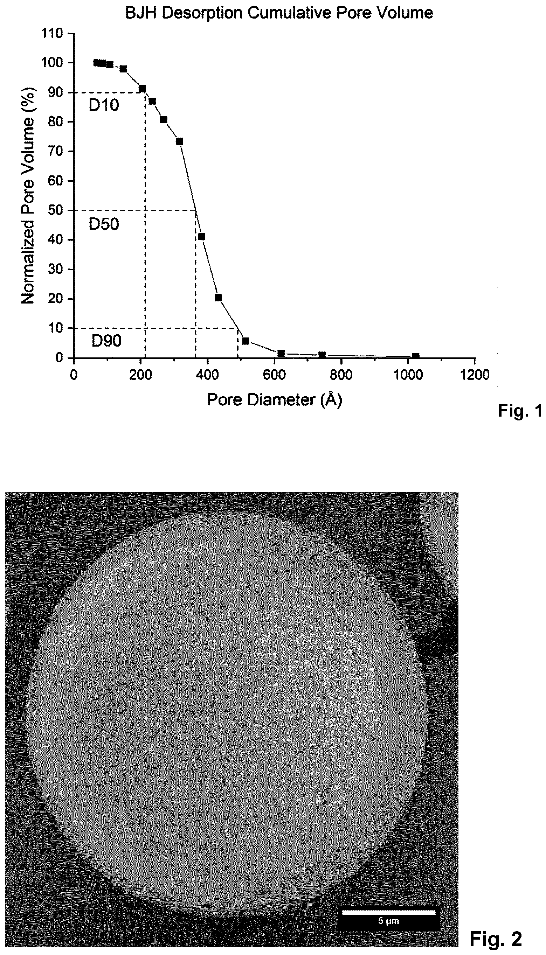

The median pore diameter can optionally be referred to as a "D50" pore diameter. Pores with a diameter less than or equal to the median (D50) pore diameter contain 50% of the total pore volume of the material. Similarly, the "D10" or "D90" pore diameters are the diameters at which, respectively, 10% or 90% of the pore volume is contained. Thus, pores with diameters less than or equal to the D10 or D90 diameters contain, respectively, 10% or 90% of the total pore volume. The D10, D50 and D90 points are illustrated in Figure 1.

Pore size distribution is a measure of the spread of pore sizes in the material. This can be conveniently expressed by the D90/D10 ratio. A smaller number implies a narrower spread of pore sizes. Another measure is the span, i.e. calculated according to the equation [D90-D10]/D50.

In embodiments, the span is 0.80 or lower, for example in the range of from 0.05 to 0.80, for example in the range of from 0.10 to 0.80, or from 0.30 to 0.80.

A suitable way of measuring pore size distribution and the D10, D50 and D90 pore diameters is by the Barrett-Joyner-Halenda (BJH) method, based on nitrogen adsorption/desorption, in particular from the desorption isotherm. A suitable way of measuring surface area, pore volume and average pore diameter (from the surface area and pore volume) is by the Brunauer-Emmett-Teller (BET) method, also based on nitrogen adsorption/desorption, the surface area typically being calculated from the linear part of the isotherm. Examples of such methods are given in ISO 9277:2010 (for BET) and ISO 15901-2:2006 (for gas adsorption/desorption).

The porous silica is typically made up of micrometer-sized porous particles, i.e. typically having average particle sizes (diameters) in the range of from 1 to 100 $\mu$m average diameter, for example from 2 to 50 $\mu$m or from 4 to 20 $\mu$m.

The method enables high tailorability of the pore characteristics of the porous silica, including the ability to make porous silica with high pore volumes and high average and/or median pore diameters, with high regularity (i.e. relatively low pore size distribution).

Porous silicas with high pore volumes and pore diameters are especially effective as stationary phases for large molecule separation (e.g. proteins). This is because the pore size is sufficiently large to enable adsorption of such large molecules, while maintaining sufficiently high pore volume to ensure high separation efficiency, and thus ensuring that large quantities of stationary phase material will be needed. Also, by ensuring the pore volume is not too high, the mechanical strength and integrity of the porous silica can be maintained, thus avoiding damage to the material during separation column packing for example, again ensuring high separation efficiency.

The porous silica is typically prepared in a liquid phase process, as described further below. It is typically then usually removed from the liquid phase, e.g. by filtration, decantation or centrifugation, to form a solid phase, for example a dry powder. In embodiments, it can then be packed into separation columns, e.g. HPLC columns.

The porous silica can be provided in a solid form, for example as a dry powder. In embodiments, it can be packed into separation columns, e.g. HPLC columns. In the dry powder form, the particle sizes (diameters) can be in the range of from 0.5 to 100 $\mu$m, for example in the range of from 0.7 to 50 $\mu$m, from 0.8 to 30 $\mu$m, or from 1 to 25 $\mu$m. In embodiments, they can be sieved to give narrower, more specific ranges of particle sizes.

[Organomodified Silica]

In embodiments, the porous silica can be modified with one or more organic groups, for example one or more $C_1$-$C_{30}$ aliphatic groups, or one or more $C_{5-10}$ aromatic or $C_{5-10}$ heteroaromatic groups (henceforth "A" groups). In embodiments, the aromatic or heteroaromatic groups are $C_{5-6}$ aromatic or heteroaromatic groups.

In A, aliphatic organic groups can optionally be substituted, for example with one or more groups selected from -OR, -C(O)O$^-$, -C(O)OR, -C(O)NR$_2$, -OC(O)R, -NRC(O)R, -NR-C(O)-NR$_2$, -NR$_2$, -[NR$_3$]$^+$, halide, epoxy, oxo, $C_{5-6}$ aromatic groups, $C_{5-6}$ heteroaromatic groups, $C_{5-6}$ heterocyclic aliphatic groups, and glycol ether groups of general formula -[O-(CR$^a$$_2$)$_n$]$_m$-OR$^b$.

In A, aromatic organic groups can optionally be substituted, for example with one or more groups selected from -OR, -C(O)O$^-$, -C(O)OR, -C(O)NR$_2$, -OC(O)R, -NRC(O)R, -NR-C(O)-NR$_2$, -NR$_2$, -[NR$_3$]$^+$, halide, epoxy, oxo, $C_{1-30}$ aliphatic groups, $C_{5-6}$ heterocyclic aliphatic groups and glycol ether groups of general formula -[O-(CR$^a$$_2$)$_n$]$_m$-OR$^b$.

Each R group is independently selected from hydrogen, $C_{1-30}$ aliphatic groups, $C_{5-6}$ aromatic groups, $C_{5-6}$ heteroaromatic groups and $C_{5-6}$ heterocyclic aliphatic groups; each R$^a$ is selected from hydrogen and $C_{1-4}$ alkyl groups; each R$^b$ group is hydrogen or a $C_{1-10}$ alkyl group; n is an integer from 2 to 3, and m is an integer from 2 to 20.

Any aliphatic or alkyl groups described herein (including those in functional groups such as alkoxy, amide, amine and ester groups) can be linear, branched or cyclic, and can be saturated or unsaturated. Typically, they are saturated. In embodiments, linear and branched groups are used, and in further embodiments linear groups.

R groups (other than hydrogen) can optionally be substituted by one or more substituents selected from hydroxyl, epoxy, $C_{1-4}$ alkoxy, carboxyl, halide (e.g. fluorine or chlorine) and -NH$_2$.

R$^a$ and R$^b$ groups (other than hydrogen) can optionally be substituted by one or more substituents selected from hydroxyl, $C_{1-4}$ alkoxy and halide (e.g. fluorine or chlorine). In embodiments, R$^a$ groups are not halide substituted. In embodiments, R$^a$ and/or R$^b$ groups do not comprise any optional substituents.

Any heteroaromatic groups or heterocyclic aliphatic groups described herein can have one or more heteroatoms in the ring, selected from O, S and N, typically O or N. In embodiments, there are no more than 3 heteroatoms in the ring, for example no more than two, and in further embodiments there is only one heteroatom.

Unsaturated aliphatic groups can comprise one or more double bonds and/or one or more triple bonds. In embodiments, there are no triple bonds.

For compounds comprising charged groups, e.g. -C(O)O$^-$ or -[NR$_3$]$^+$ groups, they can also comprise a countering cation or anion respectively. Cations can be selected from proton (H$^+$), alkali metal, alkaline earth metal, ammonium or organoammonium ions of formula [NR$_4$]$^+$, where R is as defined above. Anions can be selected from halide (e.g. F$^-$, Cl$^-$, Br$^-$ and I$^-$), hydroxide, nitrate, sulfate, chlorate, bromate, iodate, phosphate, tetrafluoroborate, hexafluorophosphate, sulfonates of formula R$^c$SO$_3$$^-$ and phosphonates of formula R$^c$RPO$_3$$^-$, where each R is as defined above and each R$^c$ is selected from $C_{1-30}$ aliphatic groups, $C_{5-6}$ aromatic groups, and $C_{5-6}$ heteroaromatic groups, which can optionally be substituted as described above for R groups.

The modification of the silica can be achieved by reacting the silica with a suitable organic compound, for example an organosilane, which comprises the required group. This can be achieved using known procedures, for example those described in WO2007/070001. Organosilanes can be represented by the formula Si[Z]$_{4-y}$[A]$_y$. Each Z is typically selected from halides, hydroxyl and lower alkoxy groups, e.g. $C_{1-6}$ alkoxy groups or $C_{1-4}$ alkoxy groups. In embodiments, Z is selected from hydroxyl and lower alkoxy groups.

Each A is an optionally substituted $C_{1-30}$ aliphatic group, $C_{5-10}$ aromatic group or $C_{5-10}$ heteroaromatic group as defined above. y is an integer in the range of from 1 to 3. Where y is more than 1, each A can be the same or different. Where y is less than 3, each Z can be the same or different, although in embodiments all Z groups are the same. Such compounds can be purchased commercially, or can be prepared by known techniques, for example those described in Ullmann's Encyclopädie der Technischen Chemie in the section "Silicium-Verbindungen, Organische" and in the Kirk-Othmer Encyclopedia of Chemical Technology, in the section "Silicon Compounds (Silanes)".

When using an organosilane to modify the silica, one or more Si-O-Si links form with the silica surface, by reaction with one or more surface silanol groups. For convenience, this link can be represented by [SiO$_2$]-Si-[A]$_y$.

In other embodiments, they can be modified using halohydrin compounds based on the formula HO-CR(CR$_2$X)A, where R and A are each as defined above, and X is a halogen, typically chlorine or bromine, preferably chlorine. These can be reacted with a silica surface using known techniques, for example those described in WO2014/206893. In embodiments, each R is H or methyl. The halohydrin compounds can be purchased commercially, or they can be produced using known procedures, for example as described in WO2013/092778, in Ullmann's Encyclopädie der Technischen Chemie, in the section on "Epoxidverbindungen", and also in the Kirk-Othmer Encyclopedia of Chemical Technology, in the section on "Chlorohydrins".

When reacted with a silica surface (for example by stirring the compound with silica at elevated temperature), the hydroxyl group reacts with a surface silanol group on the silica. For convenience, this can be represented by $[SiO_2]$ -O-CR(CR$_2$X)A.

Where the silica is modified with two or more different organic groups, this can be achieved either by using different modifying reactants (e.g. two different $Si[Z]_{4-y}[A]_y$ reactants or two different HO-C(CR$_2$X)A reactants), where each reactant has a different A group. In other embodiments, a $Si[Z]_{4-y}[A]_y$ reactant can be used where y is at least two, and which comprises two or more different A groups.

In embodiments, the silica can be modified with one or more A groups, which are each selected from $C_{1-30}$ alkyl groups, each optionally substituted as described above, although in embodiments the alkyl groups are unsubstituted. In embodiments, the silica can be modified with a $C_{10-20}$ alkyl group and a $C_{1-4}$ alkyl group, each optionally substituted as described above, although in embodiments both alkyl groups are unsubstituted.

The silica can be modified using known techniques, for example by stirring the silica in an aqueous solution at basic pH with one or more organosilane compounds as defined above. Such techniques are described for example in WO2007/070001 and WO2014/206893.

In other embodiments, the organic modification can be present in the starting materials for producing the silica according to the invention. For example, an organosilane compound can be hydrolysed to form organosilane-modified silica particles, or in other embodiments a colloidal silica starting material can be modified with organosilane before it is gelled to form the silica according to the invention, for example using the procedure described in WO2004/035473 and WO2004/035474.

[Nanoparticulate Silica]

In producing the porous silica of the invention, a source of nanoparticulate silica is used. This can be in the form of a colloidal silica, as described further below. In other embodiments, the source of nanoparticulate silica can be a solid form of silica that is dispersed or suspended in a liquid phase. In embodiments, the silica nanoparticles (before dispersion or suspension) are in the form of fumed silica, precipitated silica or silica fume. In these types of silica, the primary particle size is preferably 200 nm or less, for example in the range of from 4 to 200 nm. The primary particles tend to be aggregated or agglomerated into larger particles, which can have diameters (or effective diameters) ranging from 300 nm to 100 μm.

Crystalline forms of silica, e.g. quartz, can also be used. However, because crystalline forms can be hazardous to health, they are preferably avoided.

[Colloidal Silica]

In preferred embodiments of the invention, the source of nanoparticulate silica is a colloidal silica, in which primary colloidal silica particles with diameters in the range of from 2 to 200 nm are suspended in an aqueous medium. Typically, the levels of agglomeration of the primary particles are low, and the silica colloid is highly stable (i.e. does not spontaneously gel or aggregate) over periods of several months, typically 4 months or more, and in embodiments 6 months or more. Colloidal silica is often also referred to as a silica sol, and in this disclosure these two terms are used interchangeably.

The extent of gelling or aggregation of a colloidal silica can be described by the so-called "S value". In embodiments, for unmodified colloidal silica, the S value in the range of from 10 to 95 %, for example from 20 to 90% or from 30 to 90%. The S-value is measured and calculated as described by Iler & Dalton (Iler & Dalton; J. Phys. Chem., 60 (1956), 955-957). High S-values indicate highly dispersed silica particles with low levels of aggregation. Conversely, lower S-values indicate increased levels of microaggregation.

When colloidal silicas are used, they can be aqueous sols containing no or low amounts of organic solvent. If organic solvents are present in aqueous colloidal silica, their concentration is in embodiments no more than 10wt%, for example no more than 5 wt% organic solvent. If organic solvent is present, it is preferably water-miscible, for example being selected from one or more of $C_{1-6}$ alkyl alcohols, $C_{1-6}$ aldehydes, $C_{3-6}$ ketones, $C_{1-6}$ carboxylic acids and their $C_{1-6}$ alkyl esters. In embodiments, if organic solvent is present, it is selected from $C_{1-6}$ alcohols.

Aqueous colloidal silicas can be basic, having a pH in the range of from 8.0 to 12.0, for example from 8.5 to 11.0. Other components of such sols include the presence of alkali metals, typically one or more of lithium, sodium and potassium, or ammonium or organoammonium ions $[NR^p_4]^+$, where each $R^p$ is independently selected from hydrogen, $C_{1-30}$ aliphatic, $C_{5-6}$ aromatic and $C_{5-6}$ heteroaromatic groups that are optionally substituted with one or more -OH or

$C_{1-4}$ alkoxy groups.

Colloidal silica with neutral or acidic pH can also be used, for example at pH values of from 2 to 7. In such embodiments, the silica particles can be surface modified with cations, such as aluminium ions, as described for example in WO01/98227, US5368833 and by Iler in The Chemistry of Silica, John Wiley and Sons (1979).

In embodiments, the colloidal silica is made from a soluble silicate (e.g. water glass) or a polysilicic acid solution. Polysilicic acid can be made by converting a soluble silicate to polysilicic acid (with a pH typically in the range of from 1-3) by ion exchange or treatment with acid, and raising the pH to 7 or more, typically 8 to 12, for example 8.5 to 11, using a basic salt such as alkali metal or $[NR_4^p]^+$ hydroxide or silicate. Examples of suitable soluble silicates that can be used to make aqueous silica sols include ammonium, lithium, sodium and potassium silicates, for example water glass.

The content of $[NR_4^p]^+$ or alkali metal in the starting silica sol is typically in the range of from 0.01 to 5.0 wt%, expressed as $[NR_4^p]$ or as alkali metal oxide. In embodiments, it is from 0.07 to 3.0 wt%.

The silica concentration in the colloidal silica can be in the range of from 1 to 60 wt%, for example from 2 to 50wt% or from 3 to 35wt%, expressed as $SiO_2$.

The colloidal silica particles can have a surface area in the range of from 50 to 900 $m^2\ g^{-1}$, for example in the range of from 50 to 500 $m^2\ g^{-1}$, such as from 100 to 450 $m^2\ g^{-1}$. The surface area of colloidal silica particles in a silica sol can be calculated from NaOH titration following the method of Sears (Sears; Anal. Chem., 1956, 28(12), 1981-1983).

The colloidal silica particles can have an average primary particle diameter ranging from 2 to 150 nm, for example from 2 to 100 nm or from 3 to 75 nm. In further embodiments, the particle diameter is in the range of from 4 to 50 nm.

The average particle diameters can be calculated from the titrated surface area using a method described in "The Chemistry of Silica", by Iler, K. Ralph, page 465, John Wiley & Sons (1979). Based on the assumption that the silica particles have a density of 2.2 $g\ cm^{-3}$, and that all particles are of the same size, have a smooth surface area and are spherical, then the average particle diameter (PD) can be calculated from Equation 1:

$$PD\ (nm) = \frac{2720}{Surface\ Area\ (m^2g^{-1})} \qquad \text{Equation 1}$$

Other ways of measuring average particle diameters include ES-DMA (electrospray differential mobility analysis), CLS (centrifugal liquid analysis), SEM (scanning electron microscopy) and TEM (transmission electron microscopy).

The density of the silica sol is at least in part dependent on the silica content, but is typically in the range of from 1.01 to 1.30 $g\ cm^{-3}$, and in embodiments it is less than 1.2 $g\ cm^{-3}$.

The viscosity of the colloidal silica is typically less than 40 cP, for example less than 30 cP, and in particular less than 20 cP. In embodiments, it is less than 10 cP. These viscosities are measured at 20.0°C. Viscosities of silica sols, including those described herein, can be measured using a conventional rotational viscometer. A method that can be used is ASTM D4016-14.

In aqueous systems, the colloidal silica particles can be dispersed in the presence of stabilising cations, which can be selected from alkali metals (e.g. $K^+$, $Na^+$, $Li^+$), and ammonium or amino ions of formula $[NR_4]^+$, where R is as defined above. Typically, they are selected from alkali metals and ammonium ($NH_4^+$), and in preferred embodiments ammonium ions are used. Alkali metals are preferably avoided, since their presence is undesirable for high purity chromatographic separation applications.

Examples of sols that can be used as starting aqueous silica sols include silica sols marketed under the name Levasil™ or Bindzil™ from Nouryon, in particular alkali metal-free grades.

[Gelling Agent]

The gelling agent is a water-soluble ionic salt, such that it is present in the aqueous phase in the method described herein. It can be a Bronsted acid, or a salt of a Brønsted acid.

Without being bound by any theory, it is thought that the gelling agent helps to shield the negative charges typically present on the surface of silica nanoparticles, e.g. those present in an aqueous colloidal silica, which assists in their aggregation/agglomeration into larger, condensed porous silica particles within the aqueous phase droplets.

Suitable inorganic anions for the acids or salts include halides (e.g. chloride, bromide and iodide), carbonate, halate (e.g. chlorate, bromate and iodate), perhalate (e.g. perchlorate, perbromate and periodate), nitrate, nitrite, silicate, aluminate, sulfate, sulfite, phosphate and phosphite.

Suitable organic ions of the acids or salts include carboxylate, for example organic compounds of formula A, comprising one or more COOH or COO⁻ group. Typically, the organic anion comprises 1 to 8 carbon atoms, and 1, 2 or 3 COOH and/or COO⁻ groups. In embodiments, the carboxylate group can be formed in situ, for example from hydrolysis of a corresponding acyl halide (e.g. chloride, bromide or iodide) or anhydride. Examples of such anions include $C_{1-8}$ carboxylates, dicarboxylates, tricarboxylates and acids thereof, optionally with one or more hydroxyl substituents. Specific examples of carboxylates include acetate, citrate and oxalate, and acids thereof.

The salt or acid can also be selected from organocarbonates, sulfonates, phosphonates and acids thereof. Examples include those of formula $R^cCO_3^-$, $R^cCO_3H$, $R^cSO_3^-$, $R^cSO_3H$, $R^cRPO_3^-$ and $R^cRPO_3H$, where R and $R^c$ are as defined above, and each typically comprises no more than 8 carbon atoms.

Where salts are used, they are typically alkali or alkaline earth metal salts, or ammonium or organoammonium salts with cations of formula $[NR^p_4]^+$, as defined above. In embodiments, $R^p$ groups comprise no more than 8 carbon atoms.

In embodiments, the gelling agent is an organic acid or salt. In further embodiments, the gelling agent is selected from carboxylates, carbonates and oxalates, and acids thereof. Organic compounds have the advantage that no residue (e.g. in the form of involatile sulfate or phosphate moieties) will be left on the silica surface after high temperature calcination, which is a process step that can be employed when preparing porous silica. For this reason, where salts are used, they can be organic salts such as $[NR^p_4]^+$ salts as defined above. A specific example of a gelling agent is ammonium acetate.

[Organic Phase]

The organic phase contains one or more organic solvents that are immiscible or partially soluble in water. The aqueous phase is dispersed in the organic phase, to form a water-in-oil dispersion or emulsion. The aqueous phase droplets typically have average droplet diameters of 100 $\mu$m or less, for example in the range of from 0.5 to 100 $\mu$m, for example from 1 to 70 $\mu$m, such as from 2 to 40 $\mu$m. Emulsions are preferred, since they are stable such that small, dispersed aqueous phase droplets are maintained over long periods of time. However, less stable dispersions can be used, for example if they are constantly stirred or otherwise agitated.

The organic solvent can have one or more polar groups that can interact with the surface of the silica nanoparticles, for example through dipolar or hydrogen bond interactions. Therefore, in embodiments, the organic solvent can be selected from those comprising one or more groups selected from esters, amides, aldehydes, ketones, alcohols (including glycols), ethers and sulfoxides. In embodiments, the organic solvent molecule has from 3 to 12 carbon atoms. Esters, ketones and ethers may, in embodiments, be part of a cyclic structure.

In embodiments the organic solvent is partially soluble in water under ambient conditions (i.e. atmospheric pressure, and 25°C). In embodiments, its solubility is no more than 10wt% in water (i.e. from 0 to 100 g $dm^{-3}$), and in embodiments the solubility is in the range of from 0.1 to 10wt% (i.e. 1 to 100 g $dm^{-3}$). Further, water is either immiscible with or only partially miscible with the organic solvent. Thus, the amount of water that can dissolve or mix with the organic solvent is no more than 10wt% in the organic solvent, and in embodiments is in the range of from 0.1 to 10 wt%.

The organic solvent (or at least one of the organic solvents) forming the "oil" phase is liquid at standard temperature and pressure (i.e. 1.013 bara and 25°C). In embodiments, it also has a boiling point higher than that of water, i.e. greater than 100 °C, for example 110 °C or more, such as 150 °C or more. In embodiments, the boiling point is no higher than 400 °C.

Examples of organic solvents that can form part of the organic phase include ethyl acetate, ethyl formate, methyl acetate, n-propyl formate, iso-propyl formate, n-propyl acetate, iso-propyl acetate, iso-butyl acetate, n-butyl acetate, n-pentyl formate, iso-pentyl formate, n-pentyl acetate, iso-pentyl acetate, ethyl propionate, iso-butyl iso-butyrate, n-butyl propionate, ethyl 3-ethoxypropionate, 2-ethylhexyl acetate, acetone, methyl ethyl ketone, diethyl ketone, methyl isobutyl ketone, methyl isoamyl ketone, methyl n-amyl ketone, mesityl oxide, acetophenone, cyclohexanone, diethyl phthalate, ethyl lactate, benzyl acetate, butyrolactone, acetyl acetone, methyl cyclohexanone, benzaldehyde, diisobutyl ketone diacetone alcohol, ethylene glycol, glyceryl-$\alpha$-monochlorohydrin, propylene glycol, glycol ethers (for example propylene glycol monomethyl ether, ethylene glycol mono-methyl ether, ethylene glycol mono-ethyl ether, ethylene glycol mono-n-butyl ether, propylene glycol mono-tert-butyl ether, propylene glycol monopropyl ether, propylene glycol monobutyl ether), glycol ether esters (for example ethylene glycol mono-methyl ether acetate, ethylene glycol mono-ethyl ether acetate, ethylene glycol mono-butyl ether acetate, ethylene glycol diacetate), n-propyl alcohol, iso-propyl alcohol, n-butanol, sec-butanol, isobutanol, benzyl alcohol, phenethyl alcohol, 1-phenyl ethanol, diisopropyl ether, dimethoxymethane, dimethoxyethane, 1,4-dioxane, 1,3-dioxolane, tetrahydrofuran, anisole, phenetole and dimethyl formamide. Other examples of solvents include dimethyl sulfoxide, toluene, xylene, n-methyl-2-pyrrolidone, methyl chloride, chloroform, carbon tetrachloride, trichloroacetic acid, methyl bromide, methyl iodide, trichloroethylene, and tetrachloroethylene. The organic solvent can be a mixture of two or more solvents.

In embodiments, the organic solvent, or at least one of the organic solvents, is phenethyl alcohol, 1-phenylethanol or benzyl alcohol.

[Non-Polar Organic Compound]

In embodiments, the organic phase comprises a non-polar organic compound. The non-polar organic compound contains no polar groups, and is typically an aliphatic or aromatic hydrocarbon optionally substituted by one or more halogens, for example fluoride, chloride, bromide or iodide, typically fluoride or chloride. In embodiments, it is liquid at standard temperature and pressure (i.e. 1.013 bar-a and 25°C). Examples include $C_{5-20}$ paraffins, $C_{2-20}$ haloparaffins, $C_{5-20}$ aromatic compounds and $C_{5-20}$ haloaromatic compounds, where the aromatic or haloaromatic compounds can comprise one or more $C_{1-10}$ alkyl or $C_{1-10}$ haloalkyl groups. Paraffins and haloparaffins can be linear, branched or cyclic, or can contain both cyclic and non-cyclic portions.

In embodiments, the non-polar organic compound is a non-halogenated $C_{6-10}$ aromatic hydrocarbon or mixture of such compounds, for example being selected from toluene, xylene (one or more of o-, m-, or p-xylene) and mesitylene.

The non-polar organic compound is immiscible with the aqueous phase, but at least partially miscible with the one or more other organic solvents that form the organic phase of the water-in-oil emulsion. Typically, the non-polar organic compound completely mixes with the organic phase, and does not form a separate phase. Thus, the non-polar organic compound is either fully miscible with the one or more organic solvents present in the organic phase, or is used in quantities such that it does not exceed its solubility limit in the organic phase.

Varying the relative amounts of organic solvent and non-polar organic compound can influence the size of the aqueous droplets, which in turn can influence the porosity characteristics of the resulting porous silica. In addition, the non-polar organic compound can reduce the solubility of the aqueous component in the organic phase, which can reduce shrinkage of the aqueous droplets. This helps to maintain silica particle sizes as the colloidal silica condenses to form particles within the aqueous emulsion droplets. Larger silica particles are advantageous, because when they pack together to form the porous silica, larger pores are formed, which increases the available pore size and pore volume.

Where the non-polar organic solvent is at least partially soluble in the organic phase, the solubility under standard conditions (i.e. atmospheric pressure, 25 °C) is in embodiments at least 1wt%, for example at least 10wt%, or at least 50 wt% in the one or more other organic solvents in the organic phase.

By "immiscible" in the aqueous phase is meant that the non-polar organic compound is either completely insoluble or immiscible with water, or it is meant that the solubility of water in the non-polar organic compound (and/or the solubility of the non-polar organic compound in water) is less than 0.1 wt%, for example less than 0.01 wt% (less than 1 g dm$^{-3}$, for example less than 0.5 g dm$^{-3}$ or less than 0.1 g dm$^{-3}$).

[Emulsifiers, Thickening Agents and Protective Colloids]

One or more emulsifiers can be used. They can be selected from organic emulsifiers, which are typically anionic, cationic, amphoteric, zwitterionic or nonionic surfactants, which are generally known and available commercially.

Examples of ionic emulsifiers include fatty acids, fatty amines, and fatty acid esters and partial fatty acid esters of polyvalent alcohols (e.g. mono-, di- or triglycerides), or corresponding anhydrides thereof. Fatty groups can be selected from $C_{6-22}$ aliphatic groups.

Further examples of emulsifiers include sorbitan esters (such as those sold under the trade name Span™), e.g. sorbitan monolaurate (e.g. Span™ 20) and sorbitan monooleate (e.g. Span™ 80). Further examples include polyethoxylated sorbitan esters (e.g. those sold under the trade name Tween™), such as PEG-20 sorbitan monolaurate (Tween™ 20), PEG-20 sorbitan monooleate (Tween™ 80) and Polyoxyethylenesorbitan trioleate (Tween™ 85). Other examples include $C_6$-$C_{22}$ alkyl sulfates, such as sodium dodecyl sulfate; sulfates with anions of formula $C_nH_{2n+1}(OC_mH_{2m})_p$-$OSO_3^-$ where n is from 6 to 22, m is from 2 to 3, and p is from 2 to 4, such as sodium lauryl ether sulfate and sodium $C_{12-14}$ pareth-3 sulfate; $C_{6-22}$ alkyl glycosides, such as lauryl glucoside; glucamides of formula $C_nH_{2n+1}C(O)N(X)CH_2(C_4H_4[OH]_4)CH_2OH$, where n is from 6 to 22, and X is H or $C_{1-4}$ alkyl, for example capryl methyl glucamide, lauryl methyl glucamide and dodecyl glucamide; amino acids substituted with $C_{2-16}$ carboxylate groups and their salts, for example sodium or disodium cocoyl glutamate and sodium lauroyl sarcosinate; $C_{6-22}$ fatty acids and their salts, such as sodium oleate and potassium oleate; polyethylene glycol-substituted phenols with 5 to 25 glycol units, for example polyethylene glycol p-(1,1,3,3-tetramethylbutyl)-phenyl ether (which is available as Triton™ X-100); $C_{6-22}$ alkyl amine oxides, such as lauramine oxide and $C_{6-22}$ alkyl alcohols, such as cetyl alcohol and stearyl alcohol. Further examples include polymeric emulsifiers, such as (meth)acrylate and (meth)acrylic acid polymers (e.g. polymethylmethacrylic acid) and polymers based on organoammonium salts having at least one $C_{3-10}$ alkenyl group and at least one $C_{1-4}$ alkyl group, for example polydiallyldimethylammonium chloride (polyDADMAC).

One or more protective colloids can be used, often in combination with an emulsifier. Examples include polyvinyl alcohol or polyvinylpyrrolidone.

Polyvinyl alcohols can optionally be partially or fully saponified. In embodiments, the polyvinyl alcohol has a degree of hydrolysis in the range of from 70 to 100 mol%, for example in the range of from 80 to 100 mol%, or from 80 to 98 mol%. The Hoppler viscosity in 4% aqueous solution can be 1 to 70 mPas, or in other embodiments in the range of from 3 to 40 mPas (measured at 20°C. according to DIN 53015).

One or more thickening agents can be used, for example selected from water soluble polysaccharide-based or protein-based thickeners, such as cellulose derivatives and starch.

Cellulose derivatives include alkyl cellulose ethers, hydroxyalkyl cellulose ethers, carboxyalkyl cellulose ethers, hydroxyalkylpolyoxyalkyl cellulose ethers, and mixed ethers with at least two different substituents selected from alkyl, hydroxyalkyl, carboxyalkyl and/or hydroxyalkylpolyoxyalkyl. Alkyl groups can be $C_1$ to $C_{10}$-alkyl groups.

Cellulose ethers can have a degree of substitution (DS) in the range of from 1.2 to 2.9, for example from 1.6 to 2.2, but can also extend up to 3, which means a complete etherification of the cellulose. The substituents can be alkoxy groups, for example $C_{1-4}$ alkoxy groups such as methoxy, ethoxy and/or propoxy groups. In embodiments, or at least one thickener is selected from methyl celluloses, ethyl celluloses, propyl celluloses, hydroxymethyl celluloses, hydroxyethyl cellulose, hydroxypropyl celluloses, methyl hydroxymethyl celluloses, methyl hydroxyethyl celluloses, methyl hydroxypropyl celluloses, ethyl hydroxymethyl celluloses, ethyl hydroxyethyl celluloses, ethyl hydroxypropyl celluloses, propyl hydroxymethyl celluloses, propyl hydroxyethyl celluloses and propyl hydroxypropyl celluloses.

Other polysaccharides that can be used include chemically modified or unmodified polysaccharides, for example guar, dextran, chitin, chitosan, mannans, galactans, xylans, starch, xanthan gum, Welan gum, Gellan gum, alginates, arabinoxylan, glucan and pectin.

Gelatins can also be used as thickeners.

[Process Conditions]

In the process according to the invention, nanoparticulate silica is gelled to produce the porous silica.

The gelling of the nanoparticulate silica is carried out in a biphasic system, which comprises an organic liquid continuous phase in which there is an emulsified aqueous phase.

In the method, a basic nanoparticulate dispersion (e.g. a basic aqueous colloidal silica as described above) is mixed with at least one organic solvent and optionally at least one non-polar organic compound to form a water-in-oil dispersion.

One or more emulsifiers, thickeners and/or protective colloids can also be present. The nanoparticulate silica is present in the emulsified aqueous phase.

The one or more organic solvent(s) and optional non-polar organic compound(s) are present in the continuous organic phase.

Without being bound by theory, it is thought that silica nanoparticles in the emulsified aqueous phase (in the presence of the gelling agent) to create a porous silica network made up condensed silica nanospheres, with water-filled voids inbetween. The liquid components are then removed to leave a porous silica.

The content of silica (based on dry weight of $SiO_2$) in the total synthesis mixture can be in the range of from 0.1 to 40 wt%, for example in the range of from 1 to 30 wt% or from 5 to 25 wt%.

The weight ratio of silica (based on dry weight of $SiO_2$) to the gelling agent can be in the range of from 1:1 to 100:1, for example in the range of from 4:1 to 80:1 or from 20:1 to 50:1.

The weight ratio of organic solvent to silica (based on dry weight of $SiO_2$) can be in the range of from 2:1 to 100:1, for example in the range of from 10:1 to 80:1.

When a non-polar organic compound is present, the weight ratio of the one or more non-polar organic compounds to the one or more organic solvents in embodiments is in the range of from 1:100 to 100:1, for example in the range of from 1:50 to 50:1, such as from 1:10 to 10:1. In embodiments, the ratio is from 1:5 to 2:1.

Where emulsifiers, stabilizers and/or protective colloids are used, the total amount is in the range of from 0.01 to 5 wt% of the total synthesis mixture, for example in the range of from 0.05 to 2 wt%.

Where any other components are used, they can be present in a total amount in the synthesis mixture of no more than 10 wt%, for example no more than 5 wt%, or no more than 2 wt%.

In preparing the dispersion or emulsion (preferably an emulsion), all components can be added simultaneously, or separately. In embodiments, the nanoparticulate silica-containing aqueous phase and the organic phase are separately prepared, and then mixed together. In other embodiments, aqueous emulsifier is first mixed with the organic phase, and the nanoparticulate silica-containing aqueous phase (e.g. aqueous colloidal silica) is subsequently added.

The gelling agent can be present in one of the aqueous mixtures when the dispersion or emulsion is created. Alternatively, it can be added once all the other components are present.

In gelling the nanoparticulate silica, the pH of the dispersion/emulsion, or at least the aqueous phase of the dispersion/emulsion, can be in the range of from 5 to 10. Initially, before gelling agent is added, the pH is preferably basic, e.g. a pH of 7.5 or more, to avoid premature gelling of the nanoparticulate silica, particularly if a colloidal silica is used. Acids or bases can be added in order to control the pH, e.g. organic acids that can be used as organic solvents, or basic compounds such as alkali metal hydroxides, alkaline earth metal hydroxides, ammonia or ammonium hydroxide, or hydroxides of $[NR^p_4]^+$ ions (e.g. ammonium ions), where $R^p$ is as defined above. In embodiments, alkali metal and alkaline earth metal hydroxides are avoided, so that no metallic residues are left on the porous silica after gelling, washing and calcining. In embodiments, organic acids can be added to reduce the pH of the aqueous phase, e.g. to a value of 7 or less, e.g. in the range of from 5 to 7, to induce or enhance gelling of the nanoparticulate (e.g. colloidal) silica.

An advantage of the presently described process is that evaporation of solvent is not required in order to achieve gelling, which is a technique commonly used in prior art processes. This makes the process less complex, and enables ambient or close to ambient pressure conditions to be used (e.g. in the range of from 0.8 to 1.2 bara). In embodiments, the synthesis can be conducted in a sealed vessel, e.g. autoclave, such that higher pressure synthesis is possible, e.g. pressures in the range of from 0.8 to 10 bara, for example from 0.8 to 5 bara.

Although the use of lower pressures can be avoided, the process can still work using evaporation methods, e.g. at pressures below 0.8 bara, for example from 0.05 bara to less than 0.8 bara, for example 0.05 bara to 0.4 bara.

The temperature of synthesis is typically in the range of from 0 to 100°C. However, elevated temperatures (i.e. above ambient temperature) are preferably used in order to increase the rate of gelling. Thus, temperatures in the range of from 40 to 100 °C, or 50 to 95 °C can be used.

Although not necessary, lower than atmospheric pressures can be used in the process for synthesizing porous silica, for example pressures down to 0.1 bara. This can help evaporate off volatile components, e.g. the water and any low-boiling solvents or organic components, which reduces the volumes necessary for subsequent separation of the solid porous silica from the liquid phase portion of the reaction mixture.

To recover the large pore porous silica of the invention, the liquid phase (or remaining liquid phase) is removed, e.g. by centrifugation, decantation or filtration. The solid silica product can then be washed and/or dried if necessary, and optionally calcined. Calcination conditions include heating in air or under an oxygen containing gas comprising from 5 to 100 vol% oxygen, at temperatures of 400 °C to 900 °C, for example in the range of from 550 to 700 °C, and at a pressure in the range of from 0.5 to 5.0 bara, for example in the range of from 0.9 to 2.5 bara.

## Examples

Three different experimental protocols were carried out. Amounts of materials used are provided in Table 1, with properties of the resulting porous silica provided in Table 2.

Four different colloidal silicas were used in the examples. They comprised ammonium ions ($NH_4^+$) as the charge-balancing cation. Their properties were as follows:

Sol 1 - 12wt% silica, 800 $m^2$ $g^{-1}$
Sol 2 - 14w% silica, 400 $m^2$ $g^{-1}$
Sol 3 - 30wt% silica, 220 $m^2$ $g^{-1}$
Sol 4 - Sol 3 diluted to 14wt% with deionized water
Sol 5 - 40 wt% silica, 130 $m^2g^{-1}$
Sol 6 - Sol 5 diluted to 15wt% with deionized water
Sol 7 - Sol 5 diluted to 25wt% with deionized water

For sols 4, 6 and 7, the deionized water contained sufficient aqueous ammonia solution (25%) in order to ensure the concentration of ammonium ions was the same as the pre-diluted sol.

For each procedure, a 5wt% aqueous solution of hydroxypropyl cellulose (HPC) was used as an emulsifier. It was prepared by dispersing 5 g HPC in 95 g deionized water at 60°C. The mixture was stirred continuously, and allowed to cool to room temperature after one hour. Stirring was continued for 24h. It was then filtered twice over 5 μm pore size filter paper, and stored in a plastic container.

[Synthetic Procedure 1]

An oil phase was prepared by mixing phenethyl alcohol and 5wt% HPC solution in a round-bottom flask at room temperature, and stirring for 30 minutes, at which point the mixture was fully transparent.

Colloidal silica and (where used) 5M aqueous ammonium acetate solution were then added under constant stirring to form a water-in-oil emulsion with a white/milky appearance. After 60 minutes stirring, the round bottom flask was attached to a rotary evaporator fitted with a water bath, and rotated at the temperature and reduced pressure specified in Table 1.

Rotary evaporation was continued for 90 minutes, at which point almost all the water from the aqueous phase has been removed, resulting in an almost totally clear/transparent mixture. The temperature was then increased to 85 °C for a further 30 minutes, before being allowed to cool to room temperature. The resulting porous silica was separated by filtration over a pyrex glass filter, and dried at 90 °C for 16 h. It was then calcined in air at 650 °C for 4h.

[Synthetic Procedure 2]

An oil phase was prepared by mixing phenethyl alcohol and 5wt% HPC solution in a round-bottom flask at room temperature, and stirring for 30 minutes, at which point the mixture was fully transparent.

Colloidal silica and 5M aqueous ammonium acetate solution were then added under constant stirring to form a water-in-oil emulsion. After 60 minutes stirring, the round bottom flask was attached to a rotary evaporator fitted with a water bath held at the temperature specified in Table 2. The flask was rotated in the water-bath at atmospheric pressure.

After the flask was heated for the time specified in Table 2, and also under the temperature and pressure conditions specified in Table 2, the temperature of the water bath was increased to 85 °C. Stirring continued at the same pressure for a further 90 minutes.

The resulting porous silica was separated by filtration over a pyrex glass filter, and dried at 90 °C for 16 h. It was then calcined in air at 650 °C for 4h.

[Synthetic Procedure 3]

An oil phase was prepared by mixing phenethyl alcohol and 5wt% HPC solution in a round-bottom flask at room temperature, and stirring for 30 minutes, at which point the mixture was fully transparent. Mesitylene was then added, and the mixture stirred for a further 60 minutes.

Colloidal silica and 5M aqueous ammonium acetate solution were then added under constant stirring to form a water-in-oil emulsion, and stirred for 60 minutes. The round bottom flask was then attached to a rotary evaporator fitted with a water bath held at the temperature specified in Table 2. The flask was rotated in the water-bath at atmospheric pressure.

After the time specified in Table 2, after which gelling had occurred, a reduced post-gelling pressure according to Table 2 was applied for a period of approximately 30 minutes. The temperature of the water bath was then raised to 85°C and stirring continued for a further 30 minutes at the same pressure.

The resulting porous silica was separated by filtration over a pyrex glass filter, and dried at 90 °C for 16 h. It was then calcined in air at 650 °C for 4h.

[Examples 1 to 71]

Table 1 - Quantities of Materials Used

| Example | Sol | Phenethyl alcohol (g) | Mesitylene (g) | HPC Emulsifier (g) [a] | Silica (g) [b] | Gelling Agent (μl) [c] |
|---|---|---|---|---|---|---|
| 1* | 1 | 50 | 0 | 0.13 | 1.15 | 0 |
| 2* | 1 | 50 | 0 | 0.13 | 1.14 | 0 |
| 3* | 1 | 50 | 0 | 0.13 | 1.15 | 0 |
| 4* | 2 | 50 | 0 | 0.04 | 1.33 | 0 |
| 5* | 2 | 50 | 0 | 0.13 | 1.32 | 0 |
| 6 | 2 | 50 | 0 | 0.13 | 1.32 | 100 |
| 7* | 2 | 50 | 0 | 0.13 | 1.33 | 0 |
| 8 | 2 | 50 | 0 | 0.13 | 1.33 | 100 |
| 9 | 2 | 50 | 0 | 0.13 | 1.32 | 200 |
| 10 | 2 | 50 | 0 | 0.13 | 1.33 | 200 |
| 11 | 2 | 50 | 0 | 0.04 | 1.33 | 200 |
| 12 | 2 | 50 | 0 | 0.13 | 1.33 | 100 |
| 13 | 2 | 50 | 0 | 0.04 | 1.32 | 250 |
| 14 | 2 | 50 | 0 | 0.13 | 4.02 | 750 |
| 15 | 2 | 50 | 0 | 0.13 | 1.33 | 200 |
| 16 | 2 | 50 | 0 | 0.13 | 1.33 | 250 |
| 17 | 2 | 50 | 0 | 0.04 | 1.32 | 200 |
| 18 | 2 | 50 | 0 | 0.21 | 1.33 | 200 |

(continued)

| Example | Sol | Phenethyl alcohol (g) | Mesitylene (g) | HPC Emulsifier (g) [a] | Silica (g) [b] | Gelling Agent (μl) [c] |
|---------|-----|----------------------|----------------|------------------------|----------------|------------------------|
| 19* | 4 | 50 | 0 | 0.13 | 1.35 | 0 |
| 20* | 3 | 50 | 0 | 0.13 | 2.88 | 0 |
| 21* | 4 | 50 | 0 | 0.13 | 1.35 | 0 |
| 22* | 3 | 50 | 0 | 0.13 | 2.89 | 0 |
| 23 | 4 | 50 | 0 | 0.12 | 1.35 | 200 |
| 24 | 4 | 50 | 0 | 0.13 | 1.35 | 100 |
| 25 | 4 | 50 | 0 | 0.42 | 1.37 | 200 |
| 26 | 3 | 50 | 0 | 0.25 | 2.89 | 200 |
| 27 | 3 | 50 | 0 | 0.13 | 2.88 | 200 |
| 28 | 3 | 50 | 0 | 0.13 | 2.88 | 200 |
| 29 | 4 | 100 | 0 | 0.13 | 1.35 | 200 |
| 30 | 4 | 100 | 0 | 0.25 | 1.38 | 122 |
| 31 | 4 | 100 | 0 | 0.42 | 1.38 | 750 |
| 32 | 3 | 100 | 0 | 0.13 | 2.89 | 200 |
| 33 | 3 | 100 | 0 | 0.25 | 2.89 | 200 |
| 34 | 3 | 100 | 0 | 0.25 | 2.89 | 200 |
| 35 | 4 | 100 | 0 | 0.42 | 1.38 | 575 |
| 36 | 3 | 100 | 0 | 0.25 | 2.90 | 200 |
| 37 | 4 | 100 | 0 | 0.21 | 1.37 | 650 |
| 38 | 3 | 100 | 0 | 0.25 | 6.06 | 200 |
| 39 | 4 | 100 | 0 | 0.42 | 2.91 | 825 |
| 40 | 3 | 56 | 56 | 0.25 | 2.89 | 200 |
| 41 | 3 | 100 | 0 | 0.25 | 6.06 | 300 |
| 42 | 4 | 100 | 0 | 0.25 | 2.89 | 200 |
| 43 | 4 | 50 | 50 | 0.42 | 2.89 | 650 |
| 44 | 4 | 50 | 50 | 0.42 | 2.85 | 650 |
| 45 | 3 | 100 | 100 | 0.23 | 6.07 | 200 |
| 46* | 6 | 50 | 0 | 0.13 | 1.36 | 0 |
| 47* | 5 | 50 | 0 | 0.13 | 3.93 | 0 |
| 48 | 6 | 50 | 0 | 0.13 | 1.36 | 70 |
| 49* | 6 | 50 | 0 | 0.13 | 1.36 | 0 |
| 50 | 5 | 50 | 0 | 0.13 | 1.36 | 200 |
| 51 | 5 | 50 | 0 | 0.13 | 2.94 | 150 |
| 52 | 5 | 50 | 0 | 0.13 | 2.94 | 200 |
| 53 | 6 | 100 | 0 | 0.42 | 2.93 | 1050 |
| 54 | 6 | 100 | 0 | 0.42 | 2.94 | 1200 |
| 55 | 6 | 100 | 0 | 0.42 | 2.93 | 900 |
| 56 | 7 | 100 | 0 | 0.25 | 2.46 | 300 |

(continued)

| Example | Sol | Phenethyl alcohol (g) | Mesitylene (g) | HPC Emulsifier (g) [a] | Silica (g) [b] | Gelling Agent (μl) [c] |
|---------|-----|----------------------|----------------|------------------------|----------------|------------------------|
| 57 | 6 | 100 | 0 | 0.42 | 2.94 | 1350 |
| 58 | 5 | 50 | 0 | 0.13 | 2.96 | 300 |
| 59 | 6 | 50 | 50 | 0.21 | 2.93 | 900 |
| 60 | 5 | 100 | 0 | 0.25 | 2.94 | 200 |
| 61 | 6 | 50 | 50 | 0.21 | 2.94 | 900 |
| 62 | 7 | 100 | 0 | 0.42 | 1.50 | 250 |
| 63 | 6 | 100 | 0 | 0.42 | 2.94 | 900 |
| 64 | 6 | 50 | 50 | 0.21 | 2.94 | 900 |
| 65 | 5 | 100 | 0 | 0.25 | 2.94 | 300 |
| 66 | 6 | 100 | 0 | 0.42 | 2.94 | 900 |
| 67 | 6 | 100 | 0 | 0.25 | 1.38 | 200 |
| 68 | 6 | 500 | 501 | 2.09 | 14.78 | 3000 |
| 69 | 6 | 501 | 501 | 2.09 | 14.77 | 3000 |
| 70 | 6 | 100 | 100 | 0.42 | 2.93 | 600 |
| 71 | 6 | 100 | 100 | 0.42 | 2.94 | 600 |

* Comparative example
[a] Amount of HPC expressed on a dry basis
[b] Amount of silica added on a dry basis (i.e. not including water from the sol)
[c] Volume of 5M ammonium acetate solution used

Table 2 - Synthesis Conditions

| Example | Synthetic Procedure | Heating Temp (°C) | Heating P. (mbar) [a] | Heating Time (min) | Final Press. (mbar) |
|---------|---------------------|-------------------|-----------------------|--------------------|---------------------|
| 1* | 1 | 65 | 100 | 90 | 100 |
| 2* | 1 | 65 | 160 | 90 | 160 |
| 3* | 1 | 65 | 200 | 90 | 200 |
| 4* | 1 | 65 | 100 | 90 | 100 |
| 5* | 1 | 65 | 160 | 90 | 160 |
| 6 | 1 | 65 | 100 | 90 | 100 |
| 7* | 1 | 65 | 200 | 90 | 200 |
| 8 | 1 | 65 | 160 | 90 | 160 |
| 9 | 1 | 65 | 100 | 90 | 100 |
| 10 | 1 | 65 | 100 | 90 | 100 |
| 11 | 1 | 65 | 100 | 90 | 100 |
| 12 | 1 | 65 | 200 | 90 | 200 |
| 13 | 1 | 65 | 124 | 90 | 124 |
| 14 | 1 | 65 | 124 | 90 | 124 |
| 15 | 1 | 65 | 180 | 90 | 180 |
| 16 | 1 | 65 | 160 | 90 | 160 |

(continued)

| Example | Synthetic Procedure | Heating Temp (°C) | Heating P. (mbar) [a] | Heating Time (min) | Final Press. (mbar) |
|---|---|---|---|---|---|
| 17 | 1 | 65 | 160 | 90 | 160 |
| 18 | 1 | 65 | 200 | 90 | 200 |
| 19* | 1 | 65 | 100 | 90 | 100 |
| 20* | 1 | 65 | 100 | 90 | 100 |
| 21* | 1 | 65 | 200 | 90 | 200 |
| 22* | 1 | 65 | 200 | 90 | 200 |
| 23 | 1 | 65 | 100 | 90 | 100 |
| 24 | 1 | 65 | 100 | 90 | 100 |
| 25 | 2 | 53 | atm | 90 | 100 |
| 26 | 2 | 65 | atm | 90 | atm |
| 27 | 1 | 65 | 100 | 90 | 100 |
| 28 | 1 | 65 | 100 | 90 | 100 |
| 29 | 1 | 65 | 200 | 90 | 200 |
| 30 | 2 | 53 | atm | 90 | 100 |
| 31 | 2 | 53 | atm | 45 | 100 |
| 32 | 1 | 65 | 200 | 90 | 200 |
| 33 | 2 | 53 | atm | 90 | 100 |
| 34 | 1 | 88 | 500 | 90 | 500 |
| 35 | 2 | 53 | atm | 90 | 100 |
| 36 | 2 | 88 | atm | 90 | 500 |
| 37 | 2 | 65 | atm | 90 | 200 |
| 38 | 2 | 65 | atm | 90 | 100 |
| 39 | 2 | 53 | atm | 60 | 200 |
| 40 | 3 | 65 | atm | 90 | 200 |
| 41 | 2 | 65 | atm | 90 | 200 |
| 42 | 1 | 88 | 500 | 90 | 500 |
| 43 | 3 | 80 | atm | 90 | 400 |
| 44 | 3 | 80 | atm | 90 | 400 |
| 45 | 3 | 88 | atm | 90 | 500 |
| 46* | 1 | 65 | 100 | 90 | 100 |
| 47* | 1 | 65 | 100 | 90 | 100 |
| 48 | 1 | 65 | 100 | 90 | 100 |
| 49* | 1 | 65 | 200 | 90 | 200 |
| 50 | 1 | 65 | 100 | 90 | 100 |
| 51 | 1 | 65 | 100 | 90 | 100 |
| 52 | 1 | 65 | 100 | 90 | 100 |
| 53 | 2 | 53 | atm | 45 | 100 |
| 54 | 2 | 53 | atm | 45 | 100 |

(continued)

| Example | Synthetic Procedure | Heating Temp (°C) | Heating P. (mbar) [a] | Heating Time (min) | Final Press. (mbar) |
|---|---|---|---|---|---|
| 55 | 2 | 53 | atm | 90 | 100 |
| 56 | 2 | 65 | atm | 90 | 200 |
| 57 | 2 | 53 | atm | 45 | 100 |
| 58 | 1 | 65 | 200 | 90 | 200 |
| 59 | 3 | 65 | atm | 60 | 200 |
| 60 | 1 | 88 | 500 | 90 | 500 |
| 61 | 3 | 65 | atm | 60 | 200 |
| 62 | 2 | 65 | atm | 90 | 200 |
| 63 | 2 | 65 | atm | 30 | 200 |
| 64 | 3 | 65 | atm | 90 | 200 |
| 65 | 1 | 88 | 500 | 90 | 500 |
| 66 | 2 | 65 | atm | 60 | 200 |
| 67 | 1 | 88 | 500 | 90 | 500 |
| 68 | 3 | 90 | atm | 90 | 200 |
| 69 | 3 | 88 | atm | 90 | 550 |
| 70 | 3 | 88 | atm | 90 | 500 |
| 71 | 3 | 88 | atm | 90 | 500 |
| * Comparative example [a] atm = atmospheric pressure | | | | | |

Table 3 - Porous Silica Properties

| Example | SSA ($m^2 g^{-1}$) | PV ($cm^3 g^{-1}$) | Av. PD (Å) | D50 (Å) | Span |
|---|---|---|---|---|---|
| 1* | 550 | 0.68 | 50 | 34 | 0.51 |
| 2* | 570 | 0.85 | 60 | 42 | 0.48 |
| 3* | 563 | 0.94 | 67 | 47 | 0.38 |
| 4* | 401 | 0.28 | 28 | 32 | 0.54 |
| 5* | 390 | 0.34 | 35 | 64 | 0.49 |
| 7* | 391 | 0.49 | 50 | 47 | 0.38 |
| 19* | 194 | 0.19 | 40 | 37 | 0.55 |
| 20* | 198 | 0.20 | 41 | 37 | 0.37 |
| 21* | 197 | 0.25 | 50 | 46 | 0.46 |
| 22* | 202 | 0.26 | 51 | 47 | 0.33 |
| 46* | 133 | 0.19 | 58 | 55 | 0.44 |
| 47* | 115 | 0.21 | 72 | 60 | 0.56 |
| 49* | 135 | 0.22 | 66 | 64 | 0.52 |
| | | | | | |
| 6 | 396 | 0.42 | 42 | 42 | 0.50 |
| 8 | 397 | 0.56 | 57 | 58 | 0.50 |

(continued)

| Example | SSA (m² g⁻¹) | PV (cm³ g⁻¹) | Av. PD (Å) | D50 (Å) | Span |
|---|---|---|---|---|---|
| 9 | 384 | 0.65 | 68 | 77 | 0.48 |
| 10 | 382 | 0.66 | 69 | 78 | 0.60 |
| 11 | 390 | 0.67 | 69 | 76 | 0.46 |
| 12 | 385 | 0.71 | 73 | 76 | 0.43 |
| 13 | 392 | 0.72 | 74 | 85 | 0.62 |
| 14 | 397 | 0.73 | 74 | 80 | 0.62 |
| 15 | 398 | 0.80 | 82 | 93 | 0.51 |
| 16 | 391 | 0.80 | 81 | 95 | 0.51 |
| 17 | 398 | 0.81 | 81 | 93 | 0.52 |
| 18 | 388 | 0.92 | 95 | 116 | 0.63 |
| 23 | 197 | 0.33 | 67 | 70 | 0.54 |
| 24 | 199 | 0.34 | 69 | 74 | 0.50 |
| 27 | 196 | 0.58 | 117 | 148 | 0.64 |
| 28 | 196 | 0.58 | 119 | 153 | 0.63 |
| 29 | 196 | 0.61 | 125 | 156 | 0.58 |
| 32 | 198 | 0.68 | 138 | 166 | 0.49 |
| 34 | 196 | 0.75 | 153 | 168 | 0.42 |
| 42 | 197 | 0.87 | 176 | 206 | 0.49 |
| 48 | 132 | 0.21 | 63 | 59 | 0.55 |
| 50 | 133 | 0.30 | 91 | 103 | 0.73 |
| 51 | 132 | 0.40 | 123 | 153 | 0.57 |
| 52 | 132 | 0.44 | 134 | 164 | 0.48 |
| 58 | 132 | 0.62 | 188 | 235 | 0.59 |
| 60 | 132 | 0.63 | 191 | 222 | 0.48 |
| 65 | 132 | 0.69 | 210 | 251 | 0.52 |
| 67 | 132 | 0.76 | 230 | 296 | 0.69 |
|  |  |  |  |  |  |
| 25 | 191 | 0.40 | 85 | 88 | 0.67 |
| 26 | 193 | 0.52 | 108 | 125 | 0.47 |
| 30 | 193 | 0.64 | 132 | 160 | 0.54 |
| 31 | 200 | 0.65 | 130 | 165 | 0.55 |
| 33 | 197 | 0.70 | 142 | 167 | 0.47 |
| 35 | 212 | 0.76 | 143 | 167 | 0.52 |
| 36 | 194 | 0.77 | 159 | 168 | 0.39 |
| 37 | 194 | 0.78 | 160 | 179 | 0.49 |
| 38 | 196 | 0.78 | 159 | 169 | 0.34 |
| 39 | 196 | 0.78 | 160 | 192 | 0.62 |
| 41 | 193 | 0.85 | 177 | 192 | 0.36 |

(continued)

| Example | SSA (m$^2$ g$^{-1}$) | PV (cm$^3$ g$^{-1}$) | Av. PD (Å) | D50 (Å) | Span |
|---|---|---|---|---|---|
| 53 | 127 | 0.59 | 185 | 240 | 0.59 |
| 54 | 128 | 0.60 | 188 | 240 | 0.60 |
| 55 | 131 | 0.61 | 186 | 239 | 0.64 |
| 56 | 126 | 0.62 | 195 | 255 | 0.65 |
| 57 | 130 | 0.62 | 191 | 248 | 0.61 |
| 62 | 128 | 0.65 | 204 | 250 | 0.57 |
| 63 | 128 | 0.67 | 208 | 272 | 0.65 |
| 66 | 128 | 0.72 | 223 | 305 | 0.72 |
| | | | | | |
| 40 | 193 | 0.79 | 163 | 170 | 0.34 |
| 43 | 190 | 0.93 | 195 | 219 | 0.55 |
| 44 | 195 | 0.98 | 201 | 242 | 0.67 |
| 45 | 195 | 0.99 | 204 | 226 | 0.58 |
| 59 | 129 | 0.63 | 195 | 242 | 0.56 |
| 61 | 129 | 0.63 | 195 | 250 | 0.57 |
| 64 | 134 | 0.68 | 202 | 249 | 0.57 |
| 68 | 131 | 0.81 | 248 | 327 | 0.64 |
| 69 | 127 | 0.88 | 277 | 340 | 0.69 |
| 70 | 126 | 0.93 | 295 | 364 | 0.76 |
| 71 | 130 | 0.96 | 295 | 371 | 0.73 |
| SSA = Specific Surface Area<br>PV = Pore Volume<br>Av. PD = Average Pore Diameter<br>D50 is as defined above<br>Span = [D90-D10]/D50, as defined above | | | | | |

Table 3 has been rearranged so that the samples are grouped according to their method of preparation. Also, with regard to samples made using synthetic procedure 1, samples have also been grouped into comparative and inventive examples, depending on whether or not gelling agent was used in the synthesis.

As can be seen, the inventive method is highly adaptable, being able to produce porous silica with a wide variety of properties, at least comparable to previous methods (c.f. comparative examples above), but in many cases with desirable combinations of high average and median pore diameters, high pore volumes and also low pore size distribution. For example, using conventional techniques (see comparative examples), the maximum average pore diameter is 72 Å. Using the method according to the invention, much larger pore diameters are accessible, without loss of pore volume and surface area, and while still maintaining narrow pore size distribution.

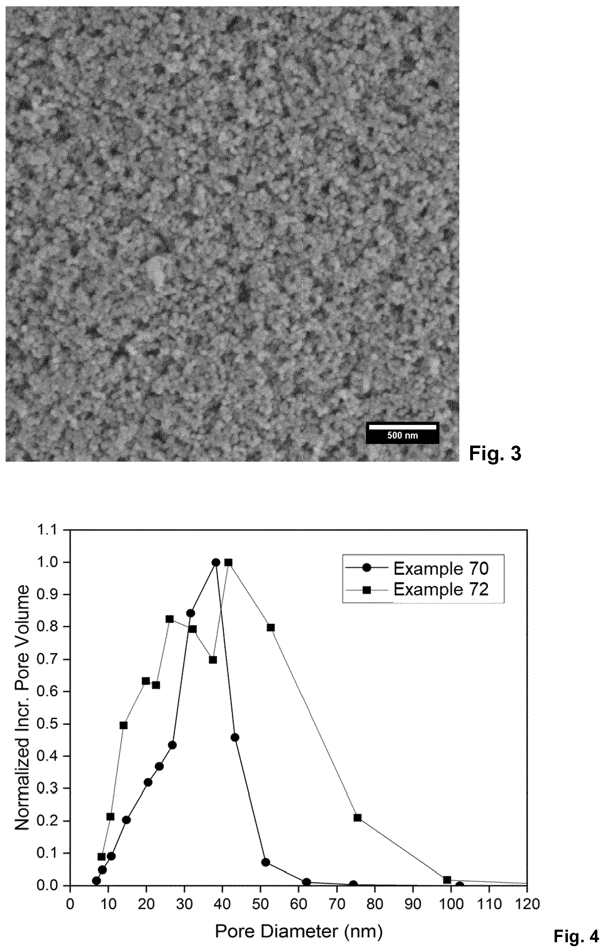

Figure 2 shows a silica particle of Example 70. The larger particle is made up of numerous smaller spherical particles (derived from the colloidal silica starting material). This is revealed more clearly in Figure 3, at higher magnification. Also visible in Figure 3 are pores formed between the smaller silica spheres that make up the larger particle.

[Comparative Examples 72-78]

A relatively low pore size silica was made by the process set out in EP0298062, similar to the procedure used above for Examples 4, 5 and 7. Silica sol 2 was used. The silica produced had an average pore diameter of 100 Å, a surface area of 319 m$^2$ g$^{-1}$ and a pore volume of 0.84 cm$^3$ g$^{-1}$

The resulting material was then subjected to Ostwald ripening to grow the particles, and to increase the average pore diameter. The process involved adding 31g of the silica to a 1 dm$^3$ steel autoclave, together with 619 g water and 73 g of 25wt% aqueous ammonia solution. The autoclave was sealed and heated to 120 °C for 116 hours. After cooling to 30 °C, 105 g of 63wt% nitric acid was added. The silica was then filtered off, washed with 300 g water, followed by 158 g acetone. The silica was then dried in an oven at 90 °C for 16 hours. The resulting material was Comparative Example 72.

This method was reproduced a further six times (Comparative Examples 73-78). The resulting silicas had the properties set out in Table 4 below.

Table 4 - Comparative porous silica properties

| Example | SSA (m$^2$ g$^{-1}$) | PV (cm$^3$ g$^{-1}$) | Av. PD (Å) | D50 (Å) | Span |
|---|---|---|---|---|---|
| 72 | 100 | 0.84 | 336.0 | 498 | 1.14 |
| 73 | 101 | 0.83 | 329.0 | 387 | 1.70 |
| 74 | 110 | 0.89 | 321.7 | 380 | 1.52 |
| 75 | 118 | 0.94 | 317.8 | 369 | 1.37 |
| 76 | 113 | 0.94 | 332.0 | 387 | 1.43 |
| 77 | 113 | 0.94 | 335.0 | 411 | 1.18 |
| 78 | 113 | 0.98 | 348.7 | 426 | 1.34 |
| SSA = Specific Surface Area<br>PV = Pore Volume<br>Av. PD = Average Pore Diameter<br>D50 is as defined above<br>Span = [D90-D10]/D50, as defined above | | | | | |

As can be clearly seen, the new inventive method is simpler than conventional Ostwald ripening processes, and also achieves significantly narrower pore size distribution (lower span value).

Figure 4 compares the pore size distribution of an inventive example (Example 70) with a comparative example (Example 72), the inventive example having significantly narrower distribution.

[Examples 79-80]

Example 79 involved a rehydroxylation treatment of Example 68. In this procedure, a round-bottom flask containing 2 g of the porous silica of Example 68 suspended in 60 g deionised water was heated under reflux overnight using an oil bath. The mixture was allowed to cool to 40 °C, and 1 ml concentrated nitric acid was added and stirred for a further 30 minutes. The mixture was filtered using a pyrex filter, and the solid residue washed with copious amounts of deionised water followed by acetone, and dried in an oven at 90 °C.

Example 80 was made by taking 1.6 g of the rehydroxylated silica of Example 79, and adding it to a round bottom flask together with 0.94 g pyridine and 150 ml toluene, heated to its boiling point using an oil bath, and held at this temperature for 30 minutes, after which the liquid volume had reduced by about 40 ml. The oil bath temperature was reduced to 90 °C, and 1.03 ml butyldimethylchlorosilane was then added. The mixture was then heated under reflux overnight. The oil bath temperature was then reduced to 75 °C, 40 ml ethanol was added to quench any unreacted silane, and the mixture allowed to cool to room temperature. The resulting solid was filtered using a pyrex glass filter, washed with ethanol, and dried in an oven at 90 °C. The solid was then calcined in air at 650 °C for 5 hours to remove the organic derivative groups.

These samples are intended to be compared with commercial silica samples (Examples 81-85 below), which are usually supplied in derivatised form (for the purposes of separation). The organic derivative groups need to be burnt off to enable the porosity characteristics of the silica to be compared.

Table 5 compares the characteristics of Example 68 with Examples 79 and 80. No significant differences are seen, hence the derivatisation and subsequent calcination treatment of the porous silica does not seem to greatly affect the underlying porosity characteristics of the silica. Consequently, reasonable comparison can be made with commercially available samples after calcined treatment to remove organic derivatives.

Table 5 - Comparison with Modified and Calcined Silicas

| Example | SSA (m$^2$ g$^{-1}$) | PV (cm$^3$ g$^{-1}$) | Av. PD (Å) | D50 (Å) | Span |
|---|---|---|---|---|---|
| 68 | 131 | 0.81 | 248 | 327 | 0.64 |
| 79 | 124 | 0.86 | 277 | 326 | 0.70 |
| 80 | 121 | 0.82 | 271 | 329 | 0.68 |
| SSA = Specific Surface Area<br>PV = Pore Volume<br>Av. PD = Average Pore Diameter<br>D50 is as defined above<br>Span = [D90-D10]/D50, as defined above | | | | | |

[Comparative Examples 81-85]

Five different commercially available butyl-modified silicas with ca 300 Å pore sizes and particle sizes of 10 to 15 μm were calcined in air at 650 °C for 5 hours to remove the organic groups. Properties are shown in Table 6.
The span of the commercially available samples is significantly greater than that of the silicas made according to the method described herein.

Table 6 - Properties of Commercially Available Silicas

| Example | SSA (m$^2$ g$^{-1}$) | PV (cm$^3$ g$^{-1}$) | Av. PD (Å) | D50 (Å) | Span |
|---|---|---|---|---|---|
| 81 | 99 | 0.74 | 300 | 403 | 1.12 |
| 82 | 113 | 0.79 | 280 | 313 | 1.00 |
| 83 | 99 | 0.96 | 389 | 430 | 1.10 |
| 84 | 120 | 1.06 | 354 | 365 | 1.21 |
| 85 | 169 | 1.41 | 334 | 344 | 0.88 |
| SSA = Specific Surface Area<br>PV = Pore Volume<br>Av. PD = Average Pore Diameter<br>D50 is as defined above<br>Span = [D90-D10]/D50, as defined above | | | | | |

[Solubility Experiments]

To demonstrate the effects of the organic solvent and the non-polar organic compound, some solubility tests were conducted. All mixtures were prepared at room temperature.

[Experiment 1]

Phenethyl alcohol was added to a flask. Water was added in sufficient amounts to ensure the phenethyl alcohol was fully saturated. The water content of the organic layer was then analysed by Karl Fischer titration. The water concentration was 7.8wt%.

[Experiment 2]

The procedure of Experiment 1 was carried out, except using mestiylene instead of phenethyl alcohol. The water content of the organic layer was 0.03 wt%.

[Experiment 3]

The procedure of Experiment 1 was carried out, except using a 50/50 wt% mixture of mesitylene and phenethyl alcohol, instead of pure phenethyl alcohol. The water content of the organic layer was 2.2 wt%.

These results demonstrate that the addition of the non-polar organic compound can reduce the water solubility of the organic solvent, and can therefore help to reduce shrinkage of the emulsion droplets during gelling.

**Claims**

1. A porous silica having an average pore diameter in the range of from 20 to 450 Å, a median (D50) pore diameter in the range of from 20 to 450 Å, a pore volume in the range of from 0.15 to 1.2 cm$^3$ g$^{-1}$, a surface area in the range of from 100 to 600 m$^2$ g$^{-1}$, and a span of 0.80 or less.

2. The porous silica as claimed in claim 1, in which one or more of the following features apply:

   (i) the average and/or mean pore diameter is in the range of from 80 Å to 450 Å;
   (ii) the pore volume is at least 0.5 cm$^3$ g$^{-1}$, and optionally also no more than 1.0 cm$^3$ g$^{-1}$;
   (iii) the span is in the range of from 0.30 to 0.80;
   (iv) the porous silica is modified with one or more organic groups, such as one or more organosilane groups;
   (v) the average particle size of the porous silica is in the range of from 1 to 100 μm.

3. A method for producing a porous silica, in which an aqueous phase comprising nanoparticulate silica and an organic phase are mixed together to form a water-in-oil dispersion or emulsion, in which the organic phase comprises an organic solvent that is insoluble or partially soluble in water, and optionally also a non-polar organic compound that is insoluble in water and at least partially soluble in the organic solvent, wherein a gelling agent is present in the aqueous phase such that the nanoparticulate silica gels to form a porous silica.

4. A method as claimed in claim 3, in which one or more of the following conditions apply:

   (i) the solubility of the organic solvent in water and/or the solubility of water in the organic solvent is less than 10wt%;
   (ii) the source of nanoparticulate silica is an aqueous colloidal silica;
   (iii) the non-polar organic compound is selected from C$_{5-20}$ paraffins, C$_{2-20}$ haloparaffins, C$_{5-20}$ aromatic compounds and C$_{5-20}$ haloaromatic compounds, where the aromatic or haloaromatic compounds can comprise one or more C$_{1-10}$ alkyl or C$_{1-10}$ haloalkyl groups;
   (iv) the organic solvent is selected from those compounds having one or more polar groups selected from esters, amides, aldehydes, ketones, alcohols (including glycols), ethers and sulfoxide;
   (v) the gelling agent is selected from organic ionic compounds and organic acids comprising 1 to 8 carbon atoms;
   (vi) the boiling point of the organic solvent is greater than 100 °C, for example in the range of from 110 °C to 400 °C.

5. The method of claim 4, in which one or more of the following conditions apply:

   (i) the non-polar organic compound, or at least one of the non-polar organic compounds, is mesitylene;
   (ii) the organic solvent, or at least one of the organic solvents, is phenethyl alcohol.

6. The method as claimed in any one of claims 3 to 5, in which the porous silica has one or more of the following properties:

   (i) a pore volume in the range of from 0.15 to 1.2 cm$^3$ g$^{-1}$;
   (ii) a specific surface area in the range of from 100 to 600 m$^2$ g$^{-1}$;
   (iii) an average and/or median (D50) pore diameter in the range of from 20 to 450 Å;
   (iv) a span of 0.80 or less

7. The method as claimed in any one of claims 3 to 6, in which one or more of the following conditions apply:

   (i) The gelling takes place at a pressure in the range of from 0.08 to 10 bara;
   (ii) The gelling takes place at a temperature in the range of from 40 to 100 °C;
   (iii) The content of silica in the emulsion or dispersion, based on dry weight of SiO$_2$, is in the range of from 0.1 to 30 wt%;
   (iv) The weight ratio of silica to gelling agent, based on dry weight of SiO$_2$, is in the range of from 1:1 to 100:1;
   (v) The weight ratio of organic solvent to silica, based on dry weight of SiO$_2$, is in the range of from 2:1 to 100:1;

(vi) The weight ratio of organic solvent to non-polar organic compound is in the range of from 200:1 to 1:1;
(vii) The porous silica is separated from the liquid phase, and calcined.

8.  The method as claimed in any one of claims 3 to 7, in which the porous silica is separated from the liquid phase and modified, optionally after calcination, with one or more organic groups.

9.  The method as claimed in claim 8, in which the porous silica particles are modified by reaction with one or more organosilane groups or one or more halohydrin groups.

10. The use of a porous silica as claimed in claim 1 or claim 2 as a stationary phase in chromatography.

11. A separation column or vessel comprising the porous silica as claimed in claim 1 or claim 2.

BJH Desorption Cumulative Pore Volume

Fig. 1

Fig. 2

**Fig. 3**

**Fig. 4**

Europäisches
Patentamt

European
Patent Office

Office européen
des brevets

# EUROPEAN SEARCH REPORT

Application Number

EP 19 17 7278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 103 209 A (BALDUCCI LUIGI [IT] ET AL) 15 August 2000 (2000-08-15) | 1-7 | INV. C01B33/159 |
| Y | * column 1, lines 27-49 * <br> * column 3, line 7 - column 7, line 27 * <br> * examples 1,20 * <br> * tables 1,2 * | 8,9 | C01B33/16 B01J20/10 |
| X,D | US 2016/122191 A1 (RESTORP PER ANDERS [SE] ET AL) 5 May 2016 (2016-05-05) | 1,2,10, 11 | |
| Y | * paragraphs [0042] - [0065], [0100] * <br> * examples 1-10 * | 8,9 | |
| X | US 2001/033931 A1 (JIANG ZHIPING [US] ET AL) 25 October 2001 (2001-10-25) | 1,2,10, 11 | |
| Y | * paragraphs [0006] - [0040] * <br> * examples 1-3 * <br> * tables 1-8 * | 8,9 | |

TECHNICAL FIELDS
SEARCHED      (IPC)

C01B
G01N
B01J

The present search report has been drawn up for all claims

| Place of search | Date of completion of the search | Examiner |
|---|---|---|
| The Hague | 6 November 2019 | Marino, Emanuela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 744 683 A1

## ANNEX TO THE EUROPEAN SEARCH REPORT
## ON EUROPEAN PATENT APPLICATION NO.

EP 19 17 7278

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2019

| Patent document cited in search report | | Publication date | Patent family member(s) | | | Publication date |
|---|---|---|---|---|---|---|
| US 6103209 | A | 15-08-2000 | DE | 69412426 | D1 | 17-09-1998 |
| | | | DE | 69412426 | T2 | 18-02-1999 |
| | | | EP | 0653378 | A1 | 17-05-1995 |
| | | | ES | 2119070 | T3 | 01-10-1998 |
| | | | IT | MI932331 | A1 | 04-05-1995 |
| | | | JP | 3785580 | B2 | 14-06-2006 |
| | | | JP | H07196311 | A | 01-08-1995 |
| | | | US | 6103209 | A | 15-08-2000 |
| US 2016122191 | A1 | 05-05-2016 | BR | 112015032101 | A2 | 25-07-2017 |
| | | | CN | 105308128 | A | 03-02-2016 |
| | | | EP | 3013907 | A1 | 04-05-2016 |
| | | | JP | 6282730 | B2 | 21-02-2018 |
| | | | JP | 6491295 | B2 | 27-03-2019 |
| | | | JP | 2016529481 | A | 23-09-2016 |
| | | | JP | 2018028548 | A | 22-02-2018 |
| | | | KR | 20160023775 | A | 03-03-2016 |
| | | | US | 2016122191 | A1 | 05-05-2016 |
| | | | WO | 2014206893 | A1 | 31-12-2014 |
| US 2001033931 | A1 | 25-10-2001 | AT | 350154 | T | 15-01-2007 |
| | | | AT | 464118 | T | 15-04-2010 |
| | | | AU | 2872100 | A | 25-08-2000 |
| | | | DE | 60032750 | T2 | 08-11-2007 |
| | | | EP | 1163050 | A1 | 19-12-2001 |
| | | | EP | 1733786 | A1 | 20-12-2006 |
| | | | JP | 4750280 | B2 | 17-08-2011 |
| | | | JP | 2002536630 | A | 29-10-2002 |
| | | | US | 2001033931 | A1 | 25-10-2001 |
| | | | WO | 0045951 | A1 | 10-08-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0298062 A
- US 3855172 A
- US 4874518 A
- WO 2007070001 A
- WO 2014206893 A
- WO 2013092778 A
- WO 2004035473 A
- WO 2004035474 A
- WO 0198227 A
- US 5368833 A

### Non-patent literature cited in the description

- Silicium-Verbindungen, Organische. Ullmann's Encyclopädie der Technischen Chemie
- Silicon Compounds (Silanes). Kirk-Othmer Encyclopedia of Chemical Technology
- Epoxidverbindungen. Ullmann's Encyclopädie der Technischen Chemie
- Chlorohydrins. Kirk-Othmer Encyclopedia of Chemical Technology
- **ILER ; DALTON.** *J. Phys. Chem.,* 1956, vol. 60, 955-957
- **ILER.** The Chemistry of Silica. John Wiley and Sons, 1979
- **SEARS.** *Anal. Chem.,* 1956, vol. 28 (12), 1981-1983
- **ILER ; K. RALPH.** The Chemistry of Silica. John Wiley & Sons, 1979, 465